# EUROPEAN PATENT APPLICATION

(11) **EP 4 716 181 A1**
(43) Date of publication of application: **25.03.2026**
(21) Application number: 25203038.2
(22) Date of filing: 18.09.2025
(51) Int. Cl.: H04L 49/65, H04L 41/0816, H04L 47/24

(54) **AUTOMATIC RECOVERY OF FLEXIBLE ETHERNET GROUPS**

(30) Priority: 24.09.2024 US 202418894833
(71) Applicant: Nokia Solutions and Networks Oy, 02610 Espoo (FI)
(72) Inventor: ROBERTS, Peter, Ottawa, K2K 2T6 (CA); HARBIN, Christopher, Stittsville, K2S 0S8 (CA); FORTIN, Eric, Nepean, K2H 1C9 (CA)
(74) Representative: Bryers Intellectual Property Ltd

(57) **Abstract**

Various example embodiments of a flexible ethernet group recovery capability are presented. The flexible ethernet group recovery capability may be provided as a Flex Ethernet (FlexE) group recovery capability. The FlexE group recovery capability may be configured to support automatic recovery of a FlexE group. The FlexE group recovery capability may be configured to support automatic recovery of a FlexE group composed of a set of members (e.g., a set of physical links, a set of logical links, or the like) in response to a condition associated with one or more of the members of the FlexE group. The FlexE group recovery capability may be configured to support automatic recovery of a FlexE group based on functions performed by the FlexE shims supporting the FlexE group.

## Description

### TECHNICAL FIELD

Various example embodiments relate generally to communication systems and, more particularly but not exclusively, to supporting communications based on Flex Ethernet (FlexE).

### BACKGROUND

Various communications technologies may be used to support communications in various types of communication systems.

### SUMMARY

In at least some example embodiments, an apparatus includes at least one processor and at least one memory storing instructions which, when executed by the at least one processor, cause the apparatus at least to perform detecting, at a node configured to support a flexible ethernet group having a set of members, a condition associated with the flexible ethernet group, reconfiguring, at the node based on the condition, the flexible ethernet group to provide a modified membership of the flexible ethernet group at the node, and sending, by the node toward a remote node, an indication of the modified membership of the flexible ethernet group at the node. In at least some example embodiments, the set of members includes a set of physical interfaces or a set of logical instances defined for a set of physical interfaces. In at least some example embodiments, reconfiguring the flexible ethernet group comprises modifying the set of members of the flexible ethernet group, based on at least one of removal of at least one existing member from the set of members or addition of at least one new member to the set of members, to provide the modified membership of the flexible ethernet group at the node. In at least some example embodiments, the reconfiguring of the flexible ethernet group to provide the modified membership of the flexible ethernet group at the node is performed by a flexible ethernet shim supporting the flexible ethernet group. In at least some example embodiments, the condition includes a reception failure associated with at least one of the members of the set of members of the flexible ethernet group. In at least some example embodiments, the instructions, when executed by the at least one processor, cause the apparatus at least to perform sending, by the node toward the remote node, an indication of the reception failure. In at least some example embodiments, the instructions, when executed by the at least one processor, cause the apparatus at least to perform receiving, at the node from the remote node, an indication of a membership of the flexible ethernet group at the remote node and restoring service for the flexible ethernet group at the node based on a determination that the modified membership of the flexible ethernet group at the node and the membership of the flexible ethernet group at the remote node match. In at least some example embodiments, the condition includes a remote failure indication for at least one of the members of the flexible ethernet group. In at least some example embodiments, the instructions, when executed by the at least one processor, cause the apparatus at least to perform receiving, at the node from the remote node associated with the flexible ethernet group, an indication of the remote failure indication. In at least some example embodiments, the instructions, when executed by the at least one processor, cause the apparatus at least to perform receiving, at the node from the remote node, an indication of a membership of the flexible ethernet group at the remote node and restoring service for the flexible ethernet group at the node based on a determination that the modified membership of the flexible ethernet group at the node and the membership of the flexible ethernet group at the remote node match. In at least some example embodiments, reconfiguring the flexible ethernet group includes modifying a group overhead of the flexible ethernet group to provide a new group overhead for the flexible ethernet group. In at least some example embodiments, the instructions, when executed by the at least one processor, cause the apparatus at least to perform supporting, at the node, a set of flexible ethernet clients based on a mapping of the set of flexible ethernet clients to the flexible ethernet group. In at least some example embodiments, the instructions, when executed by the at least one processor, cause the apparatus at least to perform modifying, at the node, the mapping of the set of flexible ethernet clients to the flexible ethernet group. In at least some example embodiments, modifying the mapping of the set of flexible ethernet clients to the flexible ethernet group includes reducing, for at least one of the flexible ethernet clients, a respective rate of the at least one of the flexible ethernet clients. In at least some example embodiments, modifying the mapping of the set of flexible ethernet clients to the flexible ethernet group includes removing, from the set of flexible ethernet clients, at least one of the flexible ethernet clients. In at least some example embodiments, the mapping of the set of flexible ethernet clients to the flexible ethernet group is modified based on an available bandwidth of the flexible ethernet group after the flexible ethernet group is reconfigured. In at least some example embodiments, the mapping of the set of flexible ethernet clients to the flexible ethernet group is modified based on a prioritization mechanism configured to select at least one of the flexible ethernet clients for which a modification operation is to be performed. In at least some example embodiments, the flexible ethernet group includes a Flex Ethernet (FlexE) group.

In at least some example embodiments, a computer readable medium stores computer program instructions which, when executed by an apparatus, cause the apparatus at least to perform detecting, at a node configured to support a flexible ethernet group having a set of members, a condition associated with the flexible ethernet group, reconfiguring, at the node based on the condition, the flexible ethernet group to provide a modified membership of the flexible ethernet group at the node, and sending, by the node toward a remote node, an indication of the modified membership of the flexible ethernet group at the node. In at least some example embodiments, the set of members includes a set of physical interfaces or a set of logical instances defined for a set of physical interfaces. In at least some example embodiments, reconfiguring the flexible ethernet group comprises modifying the set of members of the flexible ethernet group, based on at least one of removal of at least one existing member from the set of members or addition of at least one new member to the set of members, to provide the modified membership of the flexible ethernet group at the node. In at least some example embodiments, the reconfiguring of the flexible ethernet group to provide the modified membership of the flexible ethernet group at the node is performed by a flexible ethernet shim supporting the flexible ethernet group. In at least some example embodiments, the condition includes a reception failure associated with at least one of the members of the set of members of the flexible ethernet group. In at least some example embodiments, the computer program instructions, when executed by the apparatus, cause the apparatus at least to perform sending, by the node toward the remote node, an indication of the reception failure. In at least some example embodiments, the computer program instructions, when executed by the apparatus, cause the apparatus at least to perform receiving, at the node from the remote node, an indication of a membership of the flexible ethernet group at the remote node and restoring service for the flexible ethernet group at the node based on a determination that the modified membership of the flexible ethernet group at the node and the membership of the flexible ethernet group at the remote node match. In at least some example embodiments, the condition includes a remote failure indication for at least one of the members of the flexible ethernet group. In at least some example embodiments, the computer program instructions, when executed by the apparatus, cause the apparatus at least to perform receiving, at the node from the remote node associated with the flexible ethernet group, an indication of the remote failure indication. In at least some example embodiments, the computer program instructions, when executed by the apparatus, cause the apparatus at least to perform receiving, at the node from the remote node, an indication of a membership of the flexible ethernet group at the remote node and restoring service for the flexible ethernet group at the node based on a determination that the modified membership of the flexible ethernet group at the node and the membership of the flexible ethernet group at the remote node match. In at least some example embodiments, reconfiguring the flexible ethernet group includes modifying a group overhead of the flexible ethernet group to provide a new group overhead for the flexible ethernet group. In at least some example embodiments, the computer program instructions, when executed by the apparatus, cause the apparatus at least to perform supporting, at the node, a set of flexible ethernet clients based on a mapping of the set of flexible ethernet clients to the flexible ethernet group. In at least some example embodiments, the computer program instructions, when executed by the apparatus, cause the apparatus at least to perform modifying, at the node, the mapping of the set of flexible ethernet clients to the flexible ethernet group. In at least some example embodiments, modifying the mapping of the set of flexible ethernet clients to the flexible ethernet group includes reducing, for at least one of the flexible ethernet clients, a respective rate of the at least one of the flexible ethernet clients. In at least some example embodiments, modifying the mapping of the set of flexible ethernet clients to the flexible ethernet group includes removing, from the set of flexible ethernet clients, at least one of the flexible ethernet clients. In at least some example embodiments, the mapping of the set of flexible ethernet clients to the flexible ethernet group is modified based on an available bandwidth of the flexible ethernet group after the flexible ethernet group is reconfigured. In at least some example embodiments, the mapping of the set of flexible ethernet clients to the flexible ethernet group is modified based on a prioritization mechanism configured to select at least one of the flexible ethernet clients for which a modification operation is to be performed. In at least some example embodiments, the flexible ethernet group includes a Flex Ethernet (FlexE) group.

In at least some example embodiments, a method includes detecting, at a node configured to support a flexible ethernet group having a set of members, a condition associated with the flexible ethernet group, reconfiguring, at the node based on the condition, the flexible ethernet group to provide a modified membership of the flexible ethernet group at the node, and sending, by the node toward a remote node, an indication of the modified membership of the flexible ethernet group at the node. In at least some example embodiments, the set of members includes a set of physical interfaces or a set of logical instances defined for a set of physical interfaces. In at least some example embodiments, reconfiguring the flexible ethernet group comprises modifying the set of members of the flexible ethernet group, based on at least one of removal of at least one existing member from the set of members or addition of at least one new member to the set of members, to provide the modified membership of the flexible ethernet group at the node. In at least some example embodiments, the reconfiguring of the flexible ethernet group to provide the modified membership of the flexible ethernet group at the node is performed by a flexible ethernet shim supporting the flexible ethernet group. In at least some example embodiments, the condition includes a reception failure associated with at least one of the members of the set of members of the flexible ethernet group. In at least some example embodiments, the method includes sending, by the node toward the remote node, an indication of the reception failure. In at least some example embodiments, the method includes receiving, at the node from the remote node, an indication of a membership of the flexible ethernet group at the remote node and restoring service for the flexible ethernet group at the node based on a determination that the modified membership of the flexible ethernet group at the node and the membership of the flexible ethernet group at the remote node match. In at least some example embodiments, the condition includes a remote failure indication for at least one of the members of the flexible ethernet group. In at least some example embodiments, the method includes receiving, at the node from the remote node associated with the flexible ethernet group, an indication of the remote failure indication. In at least some example embodiments, the method includes receiving, at the node from the remote node, an indication of a membership of the flexible ethernet group at the remote node and restoring service for the flexible ethernet group at the node based on a determination that the modified membership of the flexible ethernet group at the node and the membership of the flexible ethernet group at the remote node match. In at least some example embodiments, reconfiguring the flexible ethernet group includes modifying a group overhead of the flexible ethernet group to provide a new group overhead for the flexible ethernet group. In at least some example embodiments, the method includes supporting, at the node, a set of flexible ethernet clients based on a mapping of the set of flexible ethernet clients to the flexible ethernet group. In at least some example embodiments, the method includes modifying, at the node, the mapping of the set of flexible ethernet clients to the flexible ethernet group. In at least some example embodiments, modifying the mapping of the set of flexible ethernet clients to the flexible ethernet group includes reducing, for at least one of the flexible ethernet clients, a respective rate of the at least one of the flexible ethernet clients. In at least some example embodiments, modifying the mapping of the set of flexible ethernet clients to the flexible ethernet group includes removing, from the set of flexible ethernet clients, at least one of the flexible ethernet clients. In at least some example embodiments, the mapping of the set of flexible ethernet clients to the flexible ethernet group is modified based on an available bandwidth of the flexible ethernet group after the flexible ethernet group is reconfigured. In at least some example embodiments, the mapping of the set of flexible ethernet clients to the flexible ethernet group is modified based on a prioritization mechanism configured to select at least one of the flexible ethernet clients for which a modification operation is to be performed. In at least some example embodiments, the flexible ethernet group includes a Flex Ethernet (FlexE) group.

In at least some example embodiments, an apparatus includes means for detecting, at a node configured to support a flexible ethernet group having a set of members, a condition associated with the flexible ethernet group, means for reconfiguring, at the node based on the condition, the flexible ethernet group to provide a modified membership of the flexible ethernet group at the node, and means for sending, by the node toward a remote node, an indication of the modified membership of the flexible ethernet group at the node. In at least some example embodiments, the set of members includes a set of physical interfaces or a set of logical instances defined for a set of physical interfaces. In at least some example embodiments, reconfiguring the flexible ethernet group comprises modifying the set of members of the flexible ethernet group, based on at least one of removal of at least one existing member from the set of members or addition of at least one new member to the set of members, to provide the modified membership of the flexible ethernet group at the node. In at least some example embodiments, the reconfiguring of the flexible ethernet group to provide the modified membership of the flexible ethernet group at the node is performed by a flexible ethernet shim supporting the flexible ethernet group. In at least some example embodiments, the condition includes a reception failure associated with at least one of the members of the set of members of the flexible ethernet group. In at least some example embodiments, the apparatus includes means for sending, by the node toward the remote node, an indication of the reception failure. In at least some example embodiments, the apparatus includes means for receiving, at the node from the remote node, an indication of a membership of the flexible ethernet group at the remote node and means for restoring service for the flexible ethernet group at the node based on a determination that the modified membership of the flexible ethernet group at the node and the membership of the flexible ethernet group at the remote node match. In at least some example embodiments, the condition includes a remote failure indication for at least one of the members of the flexible ethernet group. In at least some example embodiments, the apparatus includes means for receiving, at the node from the remote node associated with the flexible ethernet group, an indication of the remote failure indication. In at least some example embodiments, the apparatus includes means for receiving, at the node from the remote node, an indication of a membership of the flexible ethernet group at the remote node and means for restoring service for the flexible ethernet group at the node based on a determination that the modified membership of the flexible ethernet group at the node and the membership of the flexible ethernet group at the remote node match. In at least some example embodiments, the means for reconfiguring the flexible ethernet group includes means for modifying a group overhead of the flexible ethernet group to provide a new group overhead for the flexible ethernet group. In at least some example embodiments, the apparatus includes means for supporting, at the node, a set of flexible ethernet clients based on a mapping of the set of flexible ethernet clients to the flexible ethernet group. In at least some example embodiments, the apparatus includes means for modifying, at the node, the mapping of the set of flexible ethernet clients to the flexible ethernet group. In at least some example embodiments, the means for modifying the mapping of the set of flexible ethernet clients to the flexible ethernet group includes means for reducing, for at least one of the flexible ethernet clients, a respective rate of the at least one of the flexible ethernet clients. In at least some example embodiments, the means for modifying the mapping of the set of flexible ethernet clients to the flexible ethernet group includes means for removing, from the set of flexible ethernet clients, at least one of the flexible ethernet clients. In at least some example embodiments, the mapping of the set of flexible ethernet clients to the flexible ethernet group is modified based on an available bandwidth of the flexible ethernet group after the flexible ethernet group is reconfigured. In at least some example embodiments, the mapping of the set of flexible ethernet clients to the flexible ethernet group is modified based on a prioritization mechanism configured to select at least one of the flexible ethernet clients for which a modification operation is to be performed. In at least some example embodiments, the flexible ethernet group includes a Flex Ethernet (FlexE) group.

### BRIEF DESCRIPTION OF THE DRAWINGS

The teachings herein can be readily understood by considering the following detailed description in conjunction with the accompanying drawings, in which:
FIG. 1 depicts an example embodiment of a communication system configured to support automatic recovery of FlexE groups;
FIG. 2 depicts an example embodiment of a communication system configured to support automatic recovery of FlexE groups;
FIG. 3 depicts an example embodiment of a method for use by a node to support automatic recovery of a flexible ethernet group;
FIG. 4 depicts an example embodiment of a method for use by a node to support automatic recovery of a flexible ethernet group; and
FIG. 5 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments of a flexible ethernet group recovery capability are presented herein. The flexible ethernet group recovery capability may be provided as a Flex Ethernet (FlexE) group recovery capability (e.g., where flexible ethernet is based on FlexE). The FlexE group recovery capability may be configured to support automatic recovery of a FlexE group. The FlexE group recovery capability may be configured to support automatic recovery of a FlexE group composed of a set of members (e.g., a set of physical links, a set of logical links, or the like) in response to a condition associated with one or more of the members of the FlexE group. The FlexE group recovery capability may be configured to support automatic recovery of a FlexE group based on functions performed by the FlexE shims supporting the FlexE group. The FlexE group recovery capability may be configured to support automatic recovery of a FlexE group based on functions performed by the FlexE shims supporting the FlexE group where the functions performed by each of the FlexE shims supporting the FlexE group include detecting a condition associated with the FlexE group, reconfiguring the FlexE group to provide a modified membership of the FlexE group, and sending an indication of the modified membership of the FlexE group, thereby enabling both of the FlexE shims supporting the FlexE group to verify the membership of the FlexE group before restoring service to the FlexE group. The FlexE group recovery capability may be configured to support automatic recovery of a FlexE group based on functions performed by the FlexE shims supporting the FlexE group where the functions performed by each of the FlexE shims supporting the FlexE group include determining a membership of the FlexE group at a node including the FlexE shim, determining a membership of the FlexE group at a remote node of the FlexE group, and restoring service for the FlexE group based on a determination that the membership of the FlexE group at the node and the membership of the FlexE group at the remote node match. The FlexE group recovery capability may be configured to support automatic recovery of a FlexE group based on functions performed by the FlexE shims supporting the FlexE group, including interactions between the FlexE shims supporting the FlexE group, without any external network manager interactions. It will be appreciated that these and various other example embodiments of the FlexE group recovery capability may be further understood within the context of various figures presented herein, which are discussed further below.

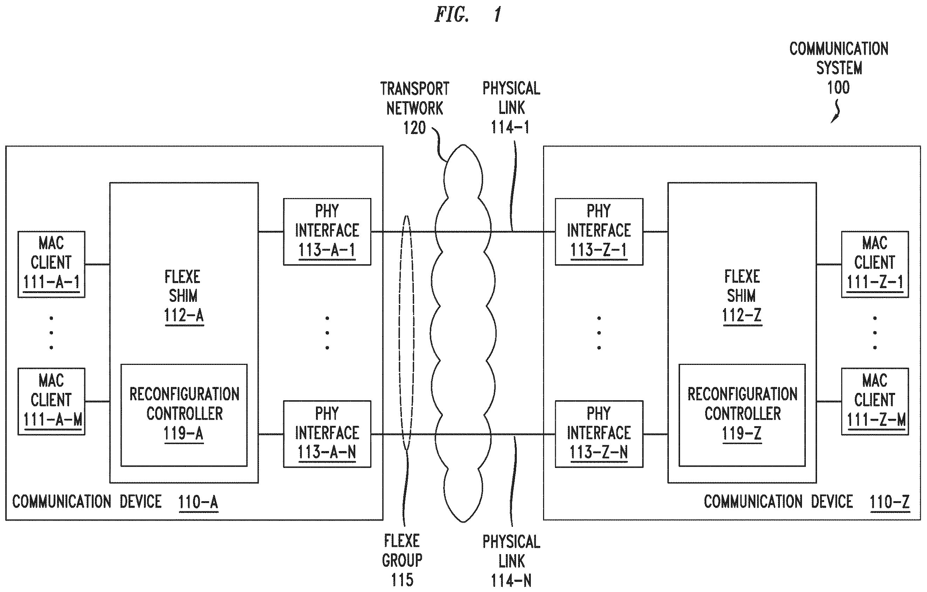

FIG. 1 depicts an example embodiment of a communication system configured to support automatic recovery of FlexE groups.

As illustrated in FIG. 1, communication system 100 supports communications based on use of Flex Ethernet (FlexE). FlexE is a flexible Ethernet client interface standard defined by the OIF Flex Ethernet Implementation Agreement. FlexE enables flexible Ethernet connectivity between routers independent of the physical line rates of the underlying physical layer, thereby enabling extension of standard Ethernet physical interfaces to add support for bonding, sub-rating, and channelization while also providing support for functions such as flexible rate matching, bandwidth configuration, service isolation, network slicing, and so forth. FlexE may be applied in various contexts within which Ethernet may be employed for communications, such as for datacenter interconnections, metro transport networks, and so forth. As illustrated in FIG. 1, and discussed further herein, FlexE operates by decoupling the Media Access Control (MAC) layer from the physical (PHY) layer through the introduction of a FlexE shim layer, thereby providing an abstraction layer that supports bundling of multiple independent Ethernet PHY interfaces to create a bandwidth pipe between FlexE shim endpoints and use of the bandwidth pipe to support communications of one or more MAC clients.

The communication system 100 includes a pair of communication devices 110-A and 110-Z (collectively, communication devices 110) connected via a transport network 120. The communication system 100 is configured to support communications based on use of FlexE, and may be used within various types of communication contexts. For example, the communication system 100 may be used to support interconnection of datacenters, connections within metro transport networks, or the like. The communication devices 110 may include routers, optical transport devices (e.g., configured to support mapping onto optical fibers), or other types of communication devices configured to support communications based on use of FlexE. The transport network 120 may be an optical transport network or other type of transport network configured to support communications based on use of FlexE. It will be appreciated that the communication system 100, although primarily presented as including specific elements, may include various other communication elements or communication support elements, may be used within various other types of communication contexts, or the like, as well as various combinations thereof.

The communication devices 110 each include a set of MAC clients 111, a FlexE shim 112, and a group of PHY interfaces 113. More specifically, communication device 110-A includes a set of MAC clients 111-A-1 to 111-A-M (collectively, MAC clients 111-A), a FlexE shim 112-A, and a group of PHY interfaces 113-A-1 to 113-A-N (collectively, PHY interfaces 113-A) and, similarly, communication device 110-Z includes a set of MAC clients 111-Z-1 to 111-Z-M (collectively, MAC clients 111-Z), a FlexE shim 112-Z, and a group of PHY interfaces 113-Z-1 to 113-Z-N (collectively, PHY interfaces 113-Z). The PHY interfaces 113-A-1 to 113-A-N of the communication device 110-A and the of PHY interfaces 113-Z-1 to 113-Z-N are interconnected via a set of physical links 114-1 to 114-N (collectively, physical links 114), respectively. Namely, the physical link 114-1 interconnects the PHY interface 113-A-1 on communication device 110-A and the PHY interface 113-Z-1 on communication device 110-Z, and so forth, with the physical link 114-N interconnecting the PHY interface 113-A-N on communication device 110-A and the PHY interface 113-Z-N on communication device 110-Z. It will be appreciated that, although primarily described within the context of a FlexE group that is composed of physical links, the FlexE group may composed of logical links (e.g., using sub-rating on each of the PHY interfaces 113 to support multiple FlexE member instances over each of the physical links 114).

The communication devices 110 each include a FlexE shim 112. The FlexE shim 112 on a communication device 110, as indicated above, provides an abstraction layer between the MAC clients 111 of the communication device 110 and the PHY interfaces 113 of the communication device 110, enabling the PHY interfaces 113 of the communication device 110 to be bundled to create an aggregate bandwidth pipe which can be used to support the communications of the MAC clients 111 of the communication device 110. In this manner, individual ones of the MAC clients 111 of the communication device 110 do not necessarily need to be matched to specific ones of the PHY interfaces 113 of the communication device 110 (e.g., rate-matched to the available rates of individual ones of the PHY interfaces 113 of the communication device 110); rather, the aggregate bandwidth of the aggregate bandwidth pipe formed using the PHY interfaces 113 of the communication device 110 may be used to support the bandwidth needs of the individual ones of the MAC clients 111 of the communication device 110 (e.g., the bandwidth needs of any given MAC client 111 of the communication device 110 may be provided by any combination of the PHY interfaces 113 of the communication device 110). This bundling of PHY interfaces 113 of the communication devices 110 to form the aggregate bandwidth pipe, which is performed on both of the communication devices 110, as indicated above, is based on FlexE and enables establishment and use of a FlexE group between the communication devices 110.

The communication devices 110 have a FlexE group 115 configured therebetween, with the physical links 114 being the members of the FlexE group 115 such that the physical links 114 may be used together as an aggregate bandwidth pipe to support communications between the communication devices 110. The PHY interfaces 113 on both sides of the physical links 114 are connected to the physical links 114 which form the FlexE group 115 and, thus, the PHY interfaces 113 themselves also may be considered to form part of the FlexE group 115. This association of the PHY interfaces 113 of the communication devices 110 with the FlexE group 115 enables each communication device 110 to maintain a localized view of FlexE group 115 that is specific to the communication device 110, respectively. Namely, the communication device 110-A may maintain a local view of the membership of the FlexE group 115 as being the set of PHY interfaces 113-A connected to the physical links 114 of the FlexE group 115 and, similarly, the communication device 110-Z may maintain a local view of the membership of the FlexE group 115 as being the set of PHY interfaces 113-Z connected to the physical links 114 of the FlexE group 115. As long as the localized views of the membership of the FlexE group 115 are consistent (i.e., both communication devices 110 agree on the membership of the FlexE group 115), the FlexE group 115 may be used by the communication devices 110 for communications between the communication devices 110.

The communication devices 110 are configured to support communications between the communication device 110 based on the FlexE group 115. The communication devices 110 are configured to support recovery of the FlexE group 115 in response to a condition associated with the FlexE group 115, such that the FlexE group 115 may continue to be used for communications between the communication devices 110. For example, the communication devices 110 may be configured to support recovery of the FlexE group 115 in response to a failure associated with one of the physical links 114 of the FlexE group (e.g., a failure of a PHY interface 113). For example, if one of the PHY interfaces 113 on a communication device 110 fails, then traffic across the PHY interfaces 113 on the communication device 110 becomes blocked and recovery operations need to be performed to reconfigure the FlexE shims 112 to allow the FlexE group 115 to recover using the remaining valid PHY interfaces 113. The communication devices 110 are configured to support recovery of the FlexE group 115 in response to such a failure or other types of conditions which may impact membership of the FlexE group 115. The communication devices 110 may be configured to support improved recovery of the FlexE group 115 in response to a condition associated with the FlexE group 115 locally, without requiring the involvement of an external network manager (e.g., obviating a need for a network management station(s) to be informed of a failure condition and then react to change the configuration of the FlexE group 115 in order to allow the FlexE group 115 to recover using the remaining valid PHY interfaces 113 and associated physical links 114, which can delay the recovery of the FlexE group 115 for an unacceptable duration of time depending on various factors such as the communication channels between the management station(s) and the communication devices 110).

The communication devices 110, as indicated above, may be configured to support recovery of the FlexE group 115 in response to a condition associated with the FlexE group 115. The communication devices 110 may be configured to support recovery of the FlexE group 115 in response to a condition associated with the FlexE group 115 based on configuration of the FlexE shims 112 of the communication devices 110 to support recovery of the FlexE group 115 in response to a condition associated with the FlexE group 115 (e.g., the FlexE shims 112 may be configured to perform various functions presented herein as being associated with recovery of the FlexE group 115 in response to a condition associated with the FlexE group 115). As illustrated in FIG. 1, the FlexE shims 112 include reconfiguration controllers 119 (illustratively, the FlexE shim 112-A of the communication device 110-A incudes a reconfiguration controller 119-A and the FlexE shim 112-Z of the communication device 110-Z includes a reconfiguration controller 119-Z) configured to support recovery of the FlexE group 115 in response to a condition associated with the FlexE group 115 (e.g., the reconfiguration controllers 119 of the FlexE shims 112 may be configured to perform various functions presented herein as being associated with recovery of the FlexE group 115 in response to a condition associated with the FlexE group 115). It will be appreciated that various other components or elements of the communication devices 110 also or alternatively may be configured to support local recovery of the FlexE group 115, in response to a condition associated with the FlexE group 115, without the need for involvement of any management stations.

The communication devices 110, as indicated above, may be configured to support recovery of the FlexE group 115 in response to a condition associated with the FlexE group 115. The communication devices 110 may be configured to support recovery of the FlexE group 115 in response to a condition associated with the FlexE group 115 by performing various FlexE group recovery operations to support recovery of the FlexE group 115 in response to the condition associated with the FlexE group 115. For example, the recovery operations performed by the communication devices 110 for recovery of the FlexE group 115 may include reconfiguration of the FlexE group 115 locally at the communication devices 110 (e.g., the communication devices 110 modify the membership of the FlexE group 115 locally at the communication devices 110 such that the FlexE group 115 only includes operational ones of the physical links 114 and the physical link(s) 114 which are no longer operational due to the condition are removed from the FlexE group 115 at the communication devices 110, respectively), exchanging indications of the reconfiguration of the FlexE group 115 locally at the communication devices 110 (e.g., the communication devices 110 send each other their local views of the membership of the FlexE group 115 for verification that they share a common view of the membership of the FlexE group 115), and reestablishing communications between the communication devices 110 via the FlexE group 115 when both communication devices 110 have verified a common view of the membership of the FlexE group 115. It will be appreciated that the communication devices 110 may be configured to support various other functions for supporting recovery of the FlexE group 115 in response to a condition associated with the FlexE group 115.

The communication devices 110, to support recovery of the FlexE group 115 in response to a condition associated with the FlexE group 115, may be configured to support detection and notification of the condition associated with the FlexE group 115. The condition associated with the FlexE group 115 may include any condition which impacts the membership of the FlexE group 115. For example, the condition associated with the FlexE group 115 may include a failure of one of the physical links 114 of the FlexE group (or other event which impacts availability of the physical link 114), a failure of one of the PHY interfaces 113 of the FlexE group 115 (or other event which impacts availability of the PHY interface 113 and, thus, the physical link 114), or the like. The detection of the condition associated with the FlexE group 115 by a communication device 110 may include detection of a condition for a PHY interface 113 associated with a physical link 114 that is a member of the FlexE group 115, reception of a remote condition indication that is indicative of a condition for a PHY interface 113 associated with a physical link 114 that is a member of the FlexE group 115 (e.g., from the other communication device 110 or any other suitable source of such a remote condition indication), or the like. The remote condition indication received by a communication device 110 may simply include an indication of the existence of the condition associated with the FlexE group 115 or also may include an indication of the local reconfiguration of the FlexE group 115 at the communication device 110 from which the remote condition indication is received (e.g., an indication that a condition was detected and that the condition caused the reconfiguration of the FlexE group 115 to include the membership indicated in the remote failure indication). It will be appreciated that detection and notification of the condition associated with the FlexE group 115 may be supported by the communication device 110 in various other ways.

The communication devices 110, to support recovery of the FlexE group 115 in response to a condition associated with the FlexE group 115, may be configured to support reconfiguration of the FlexE group 115 locally at the communication devices 110, respectively. For example, a communication device 110, upon detecting the condition at the communication device 110 or receiving an indication of the condition from the other communication device 110, reconfigures the FlexE group 115 at the communication device 110 by modifying the membership of the FlexE group 115 at the communication device 110. The modification of the membership of the FlexE group 115 at the communication device 110 may include removing any member(s) of the FlexE group 115 which are no longer operational due to the condition and, thus, no longer available for supporting communication of traffic of the FlexE group 115. For example, where the condition results in unavailability of one of the physical links 114, that physical link 114 may be removed from the FlexE group 115 at the communication device 110, which also may include removal of the corresponding PHY interface 113 from the FlexE group 115 at the communication device 110. For example, where a condition causes unavailability of the physical link 114-1, communication device 110-A may reconfigure the FlexE group 115 locally at the communication device 110-A such that the membership of the FlexE group 115 at the communication device 110-A is [physical link 114-2,..., physical link 114-N] and, similarly, communication device 110-Z may reconfigure the FlexE group 115 locally at the communication device 110-Z such that the membership of the FlexE group 115 at the communication device 110-Z is [physical link 114-2,..., physical link 114-N]. It will be appreciated that reconfiguration of the FlexE group 115 locally at the communication devices 110 may be supported by the communication device 110 in various other ways.

The communication devices 110, to support recovery of the FlexE group 115 in response to a condition associated with the FlexE group 115, may be configured to support exchanging of indications of the reconfiguration of the FlexE group 115 locally at the communication devices 110. This ensures that both of the communication devices 110 agree on the new membership of the FlexE group 115 after the condition before communication of traffic on the FlexE group 115 is restored. The communication device 110-A, upon detecting the condition at the communication device 110-A or receiving an indication of the condition from the communication device 110-Z, reconfigures the FlexE group 115 at the communication device 110-A and sends an indication of the reconfigured FlexE group 115 to the communication device 110-Z and, similarly, the communication device 110-Z, upon detecting the condition at the communication device 110-Z or receiving an indication of the condition from the communication device 110-A, reconfigures the FlexE group 115 at the communication device 110-Z and sends an indication of the reconfigured FlexE group 115 to the communication device 110-A. The indications of the membership of the FlexE group 115 may be sent by the communication devices 110 by sending FlexE maps which include indications of the FlexE group membership information for the FlexE group 115 after reconfiguration of the FlexE group 115 is complete. The exchanging of FlexE group membership information for the reconfigured FlexE group 115 enables the communication devices 110 to verify that the new membership of the FlexE group 115 is consistent at the communication devices 110 before continuing the use of the FlexE group 115 for communications between the communication devices 110.

The communication devices 110, to support recovery of the FlexE group 115 in response to a condition associated with the FlexE group 115, may be configured to confirm membership of the FlexE group 115 after the condition before continuing use of the FlexE group 115 for communications between the communication devices 110. The communication device 110-A compares its local view of the membership of the FlexE group 115 to the membership of the FlexE group 115 received from the communication device 110-Z and, based on a determination that both communication devices 110 have a common view of the membership of the FlexE group, to restore service on the FlexE group 115. Similarly, the communication device 110-Z compares its local view of the membership of the FlexE group 115 to the membership of the FlexE group 115 received from the communication device 110-A and, based on a determination that both communication devices 110 have a common view of the membership of the FlexE group 115, to restore service on the FlexE group 115. It is noted that, since each communication device 110 updates the membership of the FlexE group 115 locally in response to an indication of the condition and informs the other communication device 110 of the updated membership of the FlexE group 115, it is possible for both communication devices 110 to locally confirm a unified view of the membership of the FlexE group 115 and restore service on the FlexE group 115 without the assistance of any centralized management entity. In this manner, both sides of the FlexE group 115 are able to confirm a common and consistent view of the membership of the FlexE group 115 so that service on the FlexE group 115 may be restored and, thus, the FlexE group 115 is recovered despite the condition.

The communication devices 110, in response to reconfiguration of the FlexE group 115 based on a condition, may also reconfigure the set of MAC clients 111 supported by the FlexE group 115. The reconfiguration of the set of MAC clients 111 supported by the FlexE group 115 may include removal of one or more of the MAC clients 111 from being associated with the FlexE group 115. The removal of one or more of the MAC clients 111 from being associated with the FlexE group 115 may be based on the available bandwidth of the reconfigured FlexE group 115 (e.g., removing one or more of the MAC clients 111 from being associated with the FlexE group 115 such that available bandwidth of the reconfigured FlexE group 115 is sufficient to support the bandwidth requirements of the remaining MAC clients 111 associated with the FlexE group 115). The removal of one or more of the MAC clients 111 from being associated with the FlexE group 115 may be based on a prioritization mechanism configured to select the one or more of the MAC clients 111 to be removed from being associated with the FlexE group 115. The removal of one or more of the MAC clients 111 from being associated with the FlexE group 115 based on the reconfiguration of the FlexE group 115 may be performed in various other ways. It will be appreciated that the communication devices 110 may be configured to perform various other functions for supporting reconfiguration of the set of MAC clients 111 supported by the FlexE group 115.

The communication devices 110, although primarily described as supporting restoration of the FlexE group 115 based on a condition that results in removal of one more existing members from the FlexE group 115, also may be configured to support reconfiguration of the FlexE group 115 based on a condition that can result in addition of one more members to the FlexE group 115. For example, when a PHY interface 113 or an associated physical link 114, which was previously a member of the FlexE group 115 and was removed from the FlexE group 115 due to a failure condition, is restored, the communication devices 110 may support reconfiguration of the FlexE group 115 such that the physical link 114 again becomes a member of the FlexE group 115. This also may be considered to be a condition associated with the FlexE group 115 that results in local reconfiguration of the FlexE group 115 by the communication devices 110, in order to modify the membership of the FlexE group 115, such that the FlexE group 115 may continue to be used by the communication devices 110 to support communications between the communication devices 110.

It will be appreciated that the communication devices 110 may be configured to support various other functions for supporting reconfiguration of the FlexE group 115 in response to a condition associated with the FlexE group 115.

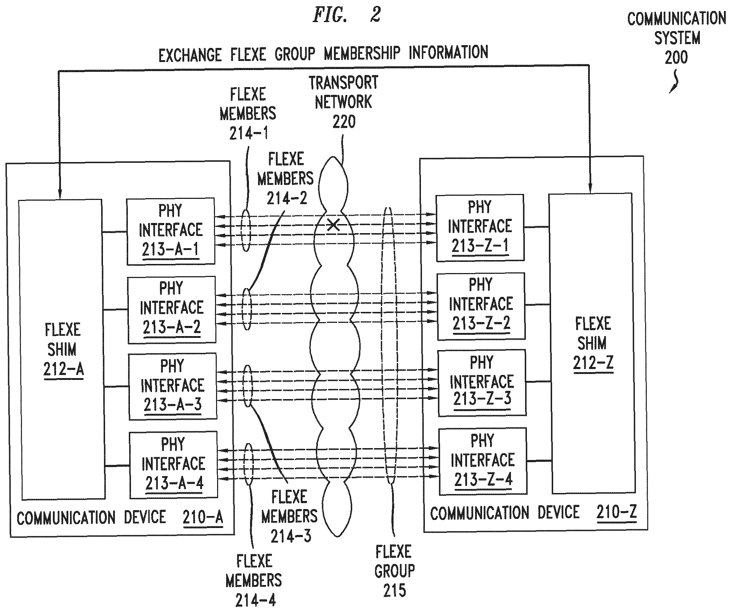

It will be appreciated that operation of the communication devices 110 to support reconfiguration of the FlexE group 115 in response to a condition associated with the FlexE group 115 may be further understood by considering the example of FIG. 2.

FIG. 2 depicts an example embodiment of a communication system configured to support automatic recovery of FlexE groups.

The communication system 200 includes a pair of communication devices 210-A and 210-Z (collectively, communication devices 210) connected via a transport network 220. The communication system 200 is configured to support communications based on use of FlexE, and may be used within various types of communication contexts. For example, the communication system 200 may be used to support interconnection of datacenters, connections within metro transport networks, or the like. The communication devices 210 may include routers, optical transport devices (e.g., configured to support mapping onto optical fibers), or other types of communication devices configured to support communications based on use of FlexE. The transport network 220 may be an optical transport network or other type of transport network configured to support communications based on use of FlexE. It will be appreciated that the communication system 200, although primarily presented as including specific elements, may include various other communication elements or communication support elements, may be used within various other types of communication contexts, or the like, as well as various combinations thereof.

The communication devices 210 each include a set of MAC clients 211, a FlexE shim 212, and a group of PHY interfaces 213. More specifically, communication device 210-A includes a set of MAC clients 211-A-1 to 211-A-M (collectively, MAC clients 211-A), a FlexE shim 212-A, and a group of PHY interfaces 213-A-1 to 213-A-4 (collectively, PHY interfaces 213-A) and, similarly, communication device 210-Z includes a set of MAC clients 211-Z-1 to 211-Z-M (collectively, MAC clients 211-Z), a FlexE shim 212-Z, and a group of PHY interfaces 213-Z-1 to 213-Z-4 (collectively, PHY interfaces 213-Z). The PHY interfaces 213-A-1 to 213-A-4 of the communication device 210-A and the of PHY interfaces 213-Z-1 to 213-Z-4 are interconnected via a set of physical links (omitted for purposes of clarity), respectively. Namely, a physical link or links interconnects the PHY interface 213-A-1 on communication device 210-A and the PHY interface 213-Z-1 on communication device 210-Z, and so forth, with a physical link or links interconnecting the PHY interface 213-A-4 on communication device 210-A and the PHY interface 213-Z-4 on communication device 210-4.

The communication devices 210 are configured to support sub-rating such that FlexE group is composed of FlexE member instances rather than the PHY interfaces 213 or associated physical links 114. Namely, the PHY interfaces 213 associated with the physical links are sub-rated such that the four pairs of PHY interfaces 213-1 to 213-4 are supporting a set of sixteen FlexE instances 214 (illustratively, the pair of PHY interfaces 213-A-1 and 213-Z-1 supports four FlexE instances 214-1-1 to 214-1-4 (collectively, FlexE instances 214-1), the pair of PHY interfaces 213-A-2 and 213-Z-2 supports four FlexE instances 214-2-1 to 214-2-4 (collectively, FlexE instances 214-2), the pair of PHY interfaces 213-A-3 and 213-Z-3 supports four FlexE instances 214-3-1 to 214-3-4 (collectively, FlexE instances 214-3), and the pair of PHY interfaces 213-A-4 and 213-Z-4 supports four FlexE instances 214-4-1 to 214-4-4 (collectively, FlexE instances 214-4). For example, where each of the PHY interfaces 213 is a 100G interface, each of the FlexE instances 214 may operate as a 25G FlexE instance. For example, where each of the PHY interfaces 213 is a 400G interface, each of the FlexE instances 214 may operate as a 100G FlexE instance. It will be appreciated that various other rates may be supported for the PHY interfaces 213 and for the corresponding FlexE instances 214 supported by the PHY interfaces 213.

The communication devices 210 are configured to support a FlexE group 215 that is composed of FlexE group members including the FlexE instances 214. The communication devices 210 are configured to support local recovery of the FlexE group 215 when a condition impacts the operation of the FlexE group 215. The communication devices 210 are configured to support local recovery of the FlexE group 215, without involvement of a centralized manager, when a condition impacts the operation of the FlexE group 215. The communication devices 210 are configured to support local recovery of the FlexE group 215, when a condition impacts the operation of the FlexE group 215, based on local FlexE group recovery operations performed on the communication devices 210 (e.g., reconfiguration of the FlexE group 215 on each of the communication devices 210, exchanging of FlexE group reconfiguration information between the communication devices 210, and so forth). The operation of the communication devices 210 to support the local recovery of the FlexE group 215 may be further understood by way of reference to the specific example of FIG. 2.

In the example of FIG. 2, initially, all sixteen of the FlexE instances 215 are operational and are members of the FlexE group 215. Then, at some point, a failure condition impacts the operation of the FlexE instance 214-1-2 between the PHY interface 213-A-1 of communication device 210-A and the PHY interface 213-Z-1 of communication device 210-Z such that the FlexE instance 214-1-2 is no longer operational (indicated by 251). The FlexE shim 212-A and the FlexE shim 212-Z each detect the failure associated with the FlexE instance 214-1-2, directly and/or based on notifications to each other up detecting the failure associated with the FlexE instance 214-1-2. The FlexE shim 212-A, based on detection of the failure associated with the FlexE instance 214-1-2, reconfigures the FlexE group 215 at the FlexE shim 214-A such that the FlexE instance 214-1-2 is no longer a member of the FlexE group 215 at the FlexE shim 214-A and sends an indication of the reconfigured FlexE group 215 at the FlexE shim 212-A to the FlexE shim 212-Z, and, similarly, the FlexE shim 212-Z, based on detection of the failure associated with the FlexE instance 214-1-2, reconfigures the FlexE group 215 at the FlexE shim 212-Z such that the FlexE instance 214-1-2 is no longer a member of the FlexE group 215 at the FlexE shim 212-Z and sends an indication of the reconfigured FlexE group 215 at the FlexE shim 212-Z to the FlexE shim 212-A. The FlexE shim 212-A compares the membership of the reconfigured FlexE group 215 at the FlexE shim 212-A to the indication of the membership of the reconfigured FlexE group 215 at the FlexE shim 212-Z that was received from the FlexE shim 212-Z and, based on a determination that the membership of the FlexE group 215 on both FlexE shims 212 is consistent, restores service on the FlexE group 215 at the FlexE shim 212-A, and, similarly, the FlexE shim 212-Z compares the membership of the reconfigured FlexE group 215 at the FlexE shim 212-Z to the indication of the membership of the reconfigured FlexE group 215 at the FlexE shim 212-A that was received from the FlexE shim 212-A and, based on a determination that the membership of the FlexE group 215 on both FlexE shims 212 is consistent, restores service on the FlexE group 215 at the FlexE shim 212-Z. In this manner, both FlexE shims 212 are able to verify a consistent view of the current membership of the FlexE group 215 before restoring service on the reconfigured FlexE group 215 for supporting communication between the communication devices 210.

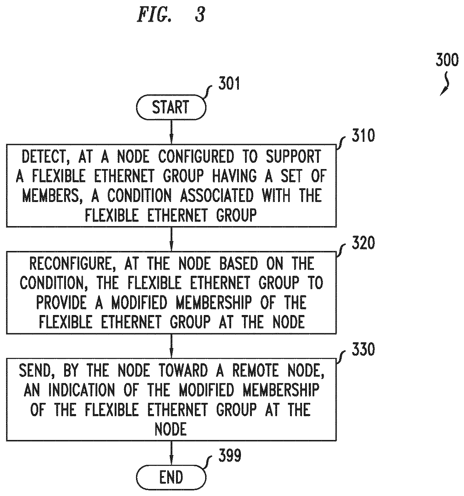

It will be appreciated that, although primarily presented with respect to example embodiments in which automated recovery is supported for a particular type of flexible ethernet (namely, FlexE as defined by the Optical Internetworking Forum (IOF)), various example embodiments presented herein may be configured to support automated recovery for other type of flexible ethernet which may be employed to support flexible communications within communication systems and, thus, it will be further appreciated that references herein to FlexE specific terms (e.g., FlexE, FlexE shim, FlexE group, and the like) may be read more generally (e.g., flexible ethernet, flexible ethernet shim flexible ethernet group, and the like) so as to potentially encompass other types of flexible ethernet which may be developed for supporting flexible communications within various types of communication systems. It is noted that various example embodiments are described within the context of this broader terminology within the context of FIG. 3 and, thus, that various example embodiments presented herein within the context of FIG. 1 and FIG. 2 may be adapted for use within the context of FIG. 3.

FIG. 3 depicts an example embodiment of a method for use by a node to support automatic recovery of a flexible ethernet group. It will be appreciated that, although primarily presented herein as being performed serially, at least a portion of the functions of method 300 may be performed contemporaneously or in a different order than as presented in FIG. 3. At block 301, the method 300 begins. At block 310, detect, at a node configured to support a flexible ethernet group having a set of members, a condition associated with the flexible ethernet group. At block 320, reconfigure, at the node based on the condition, the flexible ethernet group to provide a modified membership of the flexible ethernet group at the node. At block 330, send, by the node toward a remote node, an indication of the modified membership of the flexible ethernet group at the node. At block 399, the method 300 ends. It will be appreciated that at least a portion of the functions of the method 300 may be performed by a flexible ethernet shim of the node.

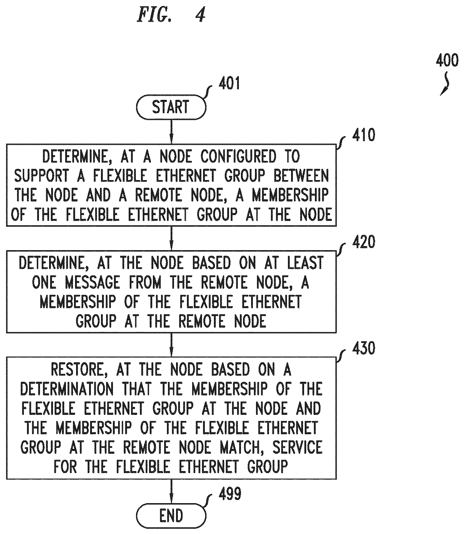

FIG. 4 depicts an example embodiment of a method for use by a node to support automatic recovery of a flexible ethernet group. It will be appreciated that, although primarily presented herein as being performed serially, at least a portion of the functions of method 400 may be performed contemporaneously or in a different order than as presented in FIG. 4. At block 401, the method 400 begins. At block 410, determine, at a node configured to support a flexible ethernet group between the node and a remote node, a membership of the flexible ethernet group at the node. At block 420, determine, at the node based on at least one message from the remote node, a membership of the flexible ethernet group at the remote node. At block 430, restore, at the node based on a determination that the membership of the flexible ethernet group at the node and the membership of the flexible ethernet group at the remote node match, service for the flexible ethernet group. At block 499, the method 400 ends. It will be appreciated that at least a portion of the functions of the method 400 may be performed by a flexible ethernet shim of the node.

Various example embodiments of the FlexE group recovery capability may be configured to provide various advantages or potential advantages. For example, various example embodiments of the FlexE group recovery capability may be configured to support automatic recovery of a FlexE group in response to a PHY interface failure. For example, various example embodiments of the FlexE group recovery capability may be configured to support automatic recovery of a FlexE group in response to a PHY interface failure based on functions performed by the FlexE shims supporting the FlexE group, without any external network manager interactions. It will be appreciated that various example embodiments of the FlexE group recovery capability may be configured to provide various other advantages or potential advantages.

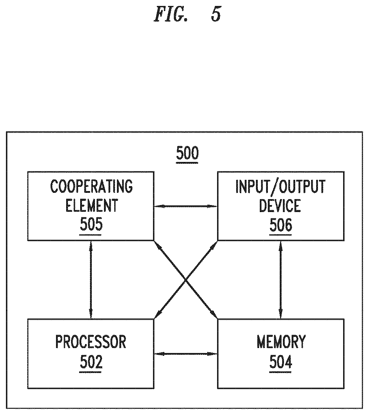

FIG. 5 depicts an example embodiment of a computer suitable for use in performing various functions presented herein.

The computer 500 includes a processor 502 (e.g., a central processing unit (CPU), a graphics processing unit (GPU), a processor, a processor core of a processor, a subset of processor cores of a processor, a set of processor cores of a processor, or the like) and a memory 504 (e.g., a random access memory (RAM), a read-only memory (ROM), or the like). In at least some example embodiments, the computer 500 may include at least one processor and at least one memory storing instructions that, when executed by the at least one processor, cause the computer to perform various functions presented herein.

The computer 500 also may include a cooperating element 505. The cooperating element 505 may be a hardware device. The cooperating element 505 may be a process that can be loaded into the memory 504 and executed by the processor 502 to implement various functions presented herein (in which case, for example, the cooperating element 505 (including associated data structures) can be stored on a non-transitory computer readable medium, such as a storage device or other suitable type of storage element (e.g., a magnetic drive, an optical drive, or the like)).

The computer 500 also may include one or more input/output devices 506. The input/output devices 506 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 500 may represent a general architecture and functionality suitable for implementing functional elements described herein, portions of functional elements described herein, or the like, as well as various combinations thereof. For example, computer 500 may provide a general architecture and functionality that is suitable for implementing one or more elements presented herein, such as a customer device or a portion thereof, a customer premises equipment device or a portion thereof, a cellular access device or a portion thereof, or the like.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus comprising means for performing:
detecting, at a node configured to support a flexible ethernet group having a set of members, a condition associated with the flexible ethernet group;
reconfiguring, at the node based on the condition, the flexible ethernet group to provide a modified membership of the flexible ethernet group at the node; and
sending, by the node toward a remote node, an indication of the modified membership of the flexible ethernet group at the node.

2. The apparatus of claim 1, wherein reconfiguring the flexible ethernet group comprises:
modifying the set of members of the flexible ethernet group, based on at least one of removal of at least one existing member from the set of members or addition of at least one new member to the set of members, to provide the modified membership of the flexible ethernet group at the node.

3. The apparatus of claim 1, wherein the reconfiguring of the flexible ethernet group to provide the modified membership of the flexible ethernet group at the node is performed by a flexible ethernet shim supporting the flexible ethernet group.

4. The apparatus of claim 1, wherein the condition comprises a reception failure associated with at least one of the members of the set of members of the flexible ethernet group.

5. The apparatus of claim 4, further comprising means for performing:
sending, by the node toward the remote node, an indication of the reception failure.

6. The apparatus of claim 4, further comprising means for performing:
receiving, at the node from the remote node, an indication of a membership of the flexible ethernet group at the remote node; and
restoring service for the flexible ethernet group at the node based on a determination that the modified membership of the flexible ethernet group at the node and the membership of the flexible ethernet group at the remote node match.

7. The apparatus of claim 1, wherein the condition comprises a remote failure indication for at least one of the members of the flexible ethernet group.

8. The apparatus of claim 7, further comprising means for performing:
receiving, at the node from the remote node associated with the flexible ethernet group, an indication of the remote failure indication.

9. The apparatus of claim 7, further comprising means for performing:
receiving, at the node from the remote node, an indication of a membership of the flexible ethernet group at the remote node; and
restoring service for the flexible ethernet group at the node based on a determination that the modified membership of the flexible ethernet group at the node and the membership of the flexible ethernet group at the remote node match.

10. The apparatus of claim 1, wherein reconfiguring the flexible ethernet group comprises:
modifying a group overhead of the flexible ethernet group to provide a new group overhead for the flexible ethernet group.

11. The apparatus of claim 1, further comprising means for performing:
supporting, at the node, a set of flexible ethernet clients based on a mapping of the set of flexible ethernet clients to the flexible ethernet group; and
modifying, at the node, the mapping of the set of flexible ethernet clients to the flexible ethernet group.

12. The apparatus of claim 11, wherein modifying the mapping of the set of flexible ethernet clients to the flexible ethernet group comprises at least one of:
reducing, for at least one of the flexible ethernet clients, a respective rate of the at least one of the flexible ethernet clients; or
removing, from the set of flexible ethernet clients, at least one of the flexible ethernet clients.

13. The apparatus of claim 11, wherein the mapping of the set of flexible ethernet clients to the flexible ethernet group is modified based on at least one of:
an available bandwidth of the flexible ethernet group after the flexible ethernet group is reconfigured; or
a prioritization mechanism configured to select at least one of the flexible ethernet clients for which a modification operation is to be performed.

14. A computer-readable storage medium storing computer program instructions which, when executed by an apparatus, cause the apparatus at least to perform:
detecting, at a node configured to support a flexible ethernet group having a set of members, a condition associated with the flexible ethernet group;
reconfiguring, at the node based on the condition, the flexible ethernet group to provide a modified membership of the flexible ethernet group at the node; and
sending, by the node toward a remote node, an indication of the modified membership of the flexible ethernet group at the node.

15. A method, comprising:
detecting, at a node configured to support a flexible ethernet group having a set of members, a condition associated with the flexible ethernet group;
reconfiguring, at the node based on the condition, the flexible ethernet group to provide a modified membership of the flexible ethernet group at the node; and
sending, by the node toward a remote node, an indication of the modified membership of the flexible ethernet group at the node.
